Europäisches Patentamt

European Patent Office

Office européen des brevets

(19)

(11) Veröffentlichungsnummer: **0 141 067**

**A2**

(12) **EUROPÄISCHE PATENTANMELDUNG**

(21) Anmeldenummer: **84109174.7**

(22) Anmeldetag: **02.08.84**

(51) Int. Cl.⁴: **C 09 B 67/34**
**C 09 D 11/02**

(30) Priorität: **13.08.83 DE 3329340**

(43) Veröffentlichungstag der Anmeldung:
**15.05.85 Patentblatt 85/20**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Degen, Hans-Juergen, Dr.**
**Schillerstrasse 6**
**D-6143 Lorsch(DE)**

(54) **Verlackungsmittel enthaltende Farbstoffzubereitungen basischer Farbstoffe.**

(57) Die Erfindung betrifft Farbstoffzubereitungen basischer Farbstoffe, die Verlackungsmittel, Säure, Wasser und gegebenenfalls Lösungsmittel enthalten.
Die erfindungsgemäßen Farbstoffzubereitungen eignen sich sehr gut zur Herstellung von Druckfarben und man erzielt damit eine deutliche Verbesserung der Ausblutechtheiten.

Croydon Printing Company Ltd.

## Verlackungsmittel enthaltende Farbstoffzubereitungen basischer Farbstoffe

Die Erfindung betrifft Farbstoffzubereitungen basischer Farbstoffe, die basische Farbstoffe, Verlackungsmittel, Säure, Wasser und gegebenenfalls Lösungsmittel enthalten.

Unter basischen (kationischen) Farbstoffen werden erfindungsgemäß diejenigen verstanden, die sich durch eine hohe Affinität zu weitgehend ligninfreier Cellulose auszeichnen. Solche Verbindungen finden sich vorzugsweise unter extern basischen und di-, oligo- oder polymeren Farbstoffen mit mesomer verteilter Ladung.

Verbindungen dieser angeführten Strukturen sind z.B. in den Schutzrechten EP 12 300, 13 751, 13 757, 15 511, 31 070, 34 725 oder 62 825, den DE-OSen 21 26 536, 27 39 953, 28 09 601, 28 10 246, 29 15 323, 30 44 563, 31 11 200 oder 32 23 951 oder der DE-AS 19 65 993 beschrieben.

Faseraffine kationische Farbstoffe im Sinne der Erfindung sind solche, die aus 0,1 %iger wäßriger Lösung zu mehr als 40 % auf gebleichten Zellstoff aufziehen, wobei die Menge des Zellstoffs so gewählt wird, daß man eine 1 %ige Färbung erhält.

Vorzugsweise ziehen mehr als 40 % des faseraffinen kationischen Farbstoffs, insbesondere 60 bis 100 und speziell 90 bis 100 % des Farbstoffs auf den gebleichten Zellstoff auf.

Die obige Definition der faseraffinen kationischen Farbstoffe dient zur Kennzeichnung der erfindungsgemäß geeigneten Farbstoffe.

Als Verlackungsmittel kommen die üblicherweise zur Verbesserung der Naßechtheiten von basischen Farbstoffen verwendeten Substanzen in Betracht. Beispielsweise seien Phenolharze, aliphatische Polycarbonsäuren, Phenol- und Naphtholsulfonsäuren, Naphthalinsulfonsäuren, Ligninsulfonsäuren sowie Mischkondensate der vorgenannten Produktklassen und insbesondere Tannin genannt. Tannin wird insbesondere deswegen bevorzugt, weil damit hergestellte Farbstoffzubereitungen sich besonders gut mit Wasser verdünnen lassen. Aliphatische Polycarbonsäuren sind ebenfalls hervorzuheben.

Als Säuren kommen für die erfindungsgemäßen Farbstoffzubereitungen anorganische und organische Säuren in Betracht, sofern sie mit den Kationen der basischen Farbstoffe keine schwerlöslichen Salze bilden. Geeignet sind z.B. gegebenenfalls substituierte Alkansäuren und Mineralsäuren, wie Ameisensäure, Essigsäure, Methoxyessigsäure, Chloressigsäure, Propionsäure, Milchsäure, Bernsteinsäure, Zitronensäure, Phosphorsäure, Methylschwefelsäure, Salzsäure oder Amidosulfonsäure.

Bevorzugt sind insbesondere Essigsäure, Alkoxyessigsäuren wie Methoxyessigsäure, Milchsäure oder Amidosulfonsäure.

Die erfindungsgemäßen Farbstoffzubereitungen können gegebenenfalls noch
für Druckfarben übliche Lösungsmittel, wie Alkanole, Glykole oder Glykolether enthalten. Einzelne Lösungsmittel sind z.B. Ethanol, Propanol,
Ethylenglykol oder Methoxy- oder Ethoxypropandiol. Im wesentlichen
handelt es sich bei den Lösungsmitteln um solche, die durch die übrigen
Bestandteile der Zubereitungen eingebracht worden sind.

Weiterhin ist auch N-Methylpyrrolidon zu nennen.

Die erfindungsgemäßen Farbstoffzubereitungen enthalten in der Regel 2
bis 30 % Farbstoff, vorzugsweise 2 bis 10 %, 5 bis 50 % Verlackungsmittel, vorzugsweise 8 bis 20 %, bezogen auf die Farbstoffmenge, 1 bis
50 % Säure und 0 bis 15 % Lösungsmittel sowie Wasser in Mengen bis zu
90 %.

Die Farbstoffzubereitungen sind überraschenderweise flüssig und ohne Ausfällungen lagerstabil und eignen sich insbesondere zur Herstellung von
Druckfarben. Sie sind mit Wasser verdünnbar und ergeben gegenüber Farbstoffzubereitungen ohne Verlackungsmittel besser ausblutechte Drucke und
Massefärbungen von Papier.

Bei der Verwendung der erfindungsgemäßen Farbstoffzubereitungen zur Herstellung von Druckfarben kann man eine weitere Verbesserung der Ausblutechtheiten erreichen, wenn man der Druckfarbe einen aliphatischen
Aldehyd, bevorzugt einen aliphatischen Dialdehyd, zusetzt und das Druckerzeugnis in der Hitze trocknet oder längere Zeit lagert. Geeignete
Aldehyde sind beispielsweise Formaldehyd, Acetaldehyd, Glutardialdehyd
oder Succindialdehyd und vorzugsweise Glyoxal.

Die Ausblutechtheiten wurden entsprechend DIN 53 991 ermittelt.

In einem weiteren Test wurde die Ausblutechtheit gegen Filterpapier nach
folgender Methode bestimmt.

Ein flächig bedrucktes Papier von der Fläche 2,5 x 2,5 cm wird für 30 sec
in die Prüfflüssigkeit eingetaucht, 30 sec abtropfen lassen und anschließend zwischen zwei Filterpapiere der Fläche 10 x 5 cm gelegt. Das so gebildete "Sandwich" wird zwischen zwei Glasplatten der Fläche 10 x 5 cm gelegt und mit 1 kg belastet. Nach 15 min werden die Filterpapiere unter Lichtausschluß an der Luft getrocknet.

Die Anfärbung der Filterpapiere wird entsprechend DIN 53 991 in einer 5teiligen Skala wie folgt bewertet:

Ausblutechtheit 5: kein Übergang von Farbstoff zu beobachten 4: sehr geringer Übergang 3: mäßige Anfärbung 2: starke Anfärbung 1: sehr starke Anfärbung

In den folgenden Beispielen beziehen sich Angaben über Teile und Prozente, sofern nicht anders vermerkt, auf das Gewicht.

Beispiel 1

Zu 100 g einer Lösung aus 20 g Farbstoff der chemischen Struktur Nr. 1, Tabelle 1 in 70 Teilen Wasser und 10 Teilen Amidosulfonsäure werden 10 g Tannin zugegeben und durch Rühren eine homogene Lösung hergestellt.

Zur Herstellung einer Druckfarbe werden 100 Teile des erhaltenen tanninhaltigen Flüssigfarbstoffes mit 200 Teilen Trinkwasser von 10°DH versetzt.

Mit der so hergestellten Druckfarbe werden Probedrucke auf einem gebleichten Zellstoff bestehend aus 70 % Kiefernsulfatzellstoff und 30 % Buchensulfitzellstoff hergestellt. Die Ausblutechtheiten dieses Drucks werden mit den Ausblutechtheiten von Drucken verglichen, die auf identische Weise mit tanninfreier Druckfarbe hergestellt wurden. Die Ergebnisse der Echtheitsprüfungen in verschiedenen Testmedien sind in der Tabelle angegeben.

Beispiel 2

Zu 100 g einer Lösung aus 20 g Farbstoff der chemischen Struktur Nr. 2, Tabelle 1, in 60 Teilen Wasser, 10 Teilen Methoxiessigsäure und 10 Teilen Amidosulfonsäure werden 20 Teile Tannin zugegeben und durch Rühren wird eine homogene Lösung hergestellt. Die Herstellung der Druckfarbe und der Vergleich mit den Ausblutechtheiten von Drucken, die auf der Basis einer tanninfreien ansonsten gleichen Druckfarbe hergestellt wurden, erfolgte wie in Beispiel 1. Die Ergebnisse sind in Tabelle 1 angeführt.

## Beispiel 3

Zu einer Lösung von 30 Teilen Farbstoff der chemischen Struktur Nr. 9, Tabelle 1, in 50 Teilen Essigsäure und 60 Teilen Wasser werden 10 Teile Tannin zugegeben und durch Rühren wird eine homogene Lösung hergestellt. Die Herstellung der Druckfarbe und der Vergleich mit den Ausblutechtheiten von Drucken, die auf der Basis einer tanninfreien, ansonsten gleichen Druckfarbe hergestellt werden, erfolgt wie in Beispiel 1. Die Ergebnisse sind in Tabelle 1 angegeben.

## Beispiel 4

Zu einer Lösung von 16 Teilen Farbstoff der chemischen Struktur Nr. 6, Tabelle 1, in 20 Teilen Essigsäure, 20 Teilen Amidosulfonsäure, 10 Teilen N-Methylpyrrolidon und 30 Teilen Wasser werden 5 Teile Tannin zugegeben und durch Rühren wird eine homogene Lösung hergestellt. Die Herstellung der Druckfarbe und der Vergleich mit Ausblutechtheiten von Drucken, die auf der Basis einer tanninfreien ansonsten gleichen Druckfarbe hergestellt wurde, erfolgte wie in Beispiel 1. Die Ergebnisse sind in Tabelle 1 verzeichnet.

## Beispiel 5

Zu einer Farbstofflösung wie in Beispiel Nr. 1 beschrieben, werden statt 10 g Tannin die in Tabelle 2 genannten Mengen der dort angeführten Harze zugegeben und durch Rühren homogene Lösungen hergestellt. Die Prüfung der Ausblutechtheiten von bedruckten Papieren erfolgt wie in den vorgenannten Beispielen beschrieben.

# Tabelle 1

BASF Aktiengesellschaft

O.Z. 0141067

| Farb-stoff-Nr. | Farbstoff der Formel | Weitere Komponenten | Tannin-gehalt | Ausblutechtheit | | | | | |
|---|---|---|---|---|---|---|---|---|---|
| | | | | DIN 53 991 | | | gegen Filterpapier | | |
| | | | | Wasser | Essigs. | Alkohol 50 %ig | Wasser | Essigs. | Alkohol 50 %ig |
| 1 | | - s.Beispiel 1 - | | 3 | 2 | 2 | 2 | 2-3 | 2 |
| 1a | | - s.Beispiel 1 - | | 3-4 | 3 | 3 | 3 | 4 | 2 |
| 2 | | - s.Beispiel 2 - | | 2 | 2 | 3 | 2 | 2 | 2 |
| 2a | | - s.Beispiel 2 - | | 4 | 4 | 3 | 3 | 3 | 2 |

Tabelle 1 (Fortsetzung)

| Farb-stoff-Nr. | Farbstoff der Formel | Weitere Komponenten | Tannin-gehalt | Ausblutechtheit | | | | | |
| --- | --- | --- | --- | --- | --- | --- | --- | --- | --- |
| | | | | DIN 53 991 | | | gegen Filterpapier | | |
| | | | | Wasser | Essigs. | Alkohol 50 %ig | Wasser | Essigs. | Alkohol 50 %ig |
| 3 | | – s.Beispiel 2 – | | 2 | 2 | 3 | 2 | 2 | 2 |
| 3a | identisch mit Beispiel 2 | – s.Beispiel 2 – | 10 % | 3-4 | 3 | 3-4 | 3 | 3 | 3 |
| 4 | | 5 Teile Essigsäure | | 3-4 | 2-3 | 2-3 | 1 | 1-2 | 1-2 |
| 4a | | 80 Teile Wasser | 5 % | 5 | 4-5 | 3-4 | 3 | 4 | 3 |

O.Z. 0050/16887

Tabelle 1 (Fortsetzung)

| Farb-stoff-Nr. | Farbstoff der Formel | Weitere Komponenten | Tannin-gehalt | DIN 53 991 | | | Ausblutechtheit gegen Filterpapier | | |
|---|---|---|---|---|---|---|---|---|---|
| | | | | Wasser | Essigs. | Alkohol 50 %ig | Wasser | Essigs. | Alkohol 50 %ig |
| 5 | | 20 Teile Essigsäure | | 1 | 1 | 1 | 1 | 1 | 1 |
| | | 10 Teile Glykol | | | | | | | |
| 5a | | 40 Teile Wasser | 5 % | 2 | 2 | 2 | 2 | 2 | 1-2 |
| 6 | | — s.Beispiel 4 — | | 5 | 4-5 | 4 | 5 | 4-5 | 4-5 |
| 6a | | — s.Beispiel 4 — | | 5 | 5 | 4-5 | 5 | 5 | 4-5 |

O.Z. 0050/36867

Tabelle 1 (Fortsetzung)

| Farb-stoff-Nr. | Farbstoff der Formel | Weitere Komponenten | Tannin-gehalt | Ausblutechtheit | | | | | |
|---|---|---|---|---|---|---|---|---|---|
| | | | | DIN 53 991 | | | gegen Filterpapier | | |
| | | | | Wasser | Essigs. | Alkohol 50 %ig | Wasser | Essigs. | Alkohol 50 %ig |
| 7 | | 10 Teile Methoxlessigsäure | | 2 | 1 | 2 | 2 | 1 | 2 |
| | $[CuPc]\{CH_2-\overset{\oplus}{N}(CH_3)_3\}_{2-3}$  $2-3\ CL^{\ominus}$ | 10 Teile Methylschwefel-säure | | | | | | | |
| 7a | | 70 Teile Wasser | 5 % | 4 | 3-4 | 3 | 3 | 3 | 3 |
| 8 | | 20 Teile Methoxyessigsäure | | 5 | 4 | 5 | 5 | 3-4 | 5 |
| | $[CuPc]\{CH_2-\text{Imidazolyl-}CH_3\}_{1,5-2}$  $1,5-2\ CH_3COOH$ | | | | | | | | |
| 8a | | 60 Teile Wasser | 5 % | 5 | 5 | 5 | 5 | 5 | 5 |

Tabelle 1 (Fortsetzung)

| Farb-stoff-Nr. | Farbstoff der Formel | Weitere Komponenten | Tannin-gehalt | Ausblutechtheit | | | | | |
|---|---|---|---|---|---|---|---|---|---|
| | | | | Wasser | DIN 53 991 Essigs. | Alkohol 50 %ig | gegen Filterpapier Wasser | Essigs. | Alkohol 50 %ig |
| 9 | | – s.Beispiel 3 – | | 4 | 3 | 2 | 4 | 3 | 1 |
| 9a | $[CuPc]-SO_2\overset{N}{\underset{H}{}}\ C_3H_6-N<\begin{matrix}CH_3\\CH_3\end{matrix}$ | – s.Beispiel 3 – | | 5 | 5 | 5 | 5 | 5 | 5 |

Die mit "a" bezeichneten Beispiele beziehen sich auf die tanninhaltigen Druckfarben.

Tabelle 2

| Farbstoff Nr. Zusammensetzung | Struktur des verwendeten Harzes (%-Gehalt bezogen auf unverdünnte Druckfarbe) | Ausblutechtheiten gegen Filterpapier | | |
|---|---|---|---|---|
| | | Wasser | Essigsäure | Alkohol 50 %ig |
| 1 | Naphthalinsulfonsäure Formaldehyd (5 %) | 3-4 | 3-4 | 3 |
| | — | 2 | 2-3 | 2 |
| 1 | Phenolsulfonsäure Formaldehyd Harnstoff (7 %) | 3 | 3-4 | 4 |
| | — | 2 | 2-3 | 2 |
| 1 | 2-Naphtholsulfonsäure Phenol, Formaldehyd (5 %) | 3 | 4 | 3 |
| | — | 2 | 2-3 | 2 |

O.Z. 0050/36867

C.Z. 0050/36688
**0141067**

## Beispiel 6

Zu der Druckfarbe aus Beispiel Nr. 2 werden vor dem Verdrucken, bezogen auf 100 Teile der verdünnten Druckfarbe, 5 Teile einer 20 %igen Lösung von Glyoxal in Wasser zugegeben. Dann wird unter den gleichen Bedingungen wie in Beispiel 2 ein Papier bedruckt und bei 90° für 2 Min. getrocknet.

Die Ausblutechtheit des so erhaltenen Druckes wird gemäß DIN 53 991 mit der Ausblutechtheit eines entsprechend Beispiel 2 hergestellten Druckes und gegenüber Filterpapier verglichen.

Im Vergleich zu Beispiel 2a ergeben sich folgende Ausblutechtheiten:

| DIN 53 991 | | gegen Filterpapier |
|---|---|---|
| Wasser: | 4-5 | 4 |
| Essigsäure: | 5 | 4 |
| Alkohol: | 4 | 3-4 |

Patentansprüche

1. Wäßrige Farbstoffzubereitungen basischer Farbstoffe, die basische Farbstoffe mit hoher Affinität zu weitgehend ligninfreier Cellulose, Verlackungsmittel, Säure, Wasser und gegebenenfalls geringe Mengen Lösungsmittel enthalten.

2. Zubereitungen gemäß Anspruch 1, dadurch gekennzeichnet, daß sie als basische Farbstoffe solche mit externer Ladung oder di-, oligo- oder polymere Farbstoffe mit mesomer verteilter Ladung enthalten.

3. Zubereitungen gemäß Anspruch 1, dadurch gekennzeichnet, daß sie Tannin als Verlackungsmittel enthalten.

4. Zubereitungen gemäß Anspruch 1, dadurch gekennzeichnet, daß sie aliphatische Polycarbonsäuren als Verlackungsmittel enthalten.

5. Zubereitungen gemäß Anspruch 1, dadurch gekennzeichnet, daß sie als Säuren Essigsäure, Alkoxessigsäuren, Milchsäure oder Amidosulfonsäure enthalten.

6. Zubereitungen gemäß Anspruch 1, dadurch gekennzeichnet, daß sie Wasser bis zu 95 % enthalten.

7. Zubereitungen gemäß Anspruch 1, dadurch gekennzeichnet, daß sie nur Lösungsmittel enthalten, die durch die übrigen Bestandteile eingebracht worden sind.

8. Druckfarben hergestellt aus Farbstoffzubereitungen gemäß Anspruch 1.

9. Druckfarben gemäß Anspruch 3 enthaltend zusätzlich einen aliphatischen Aldehyd, vorzugsweise Glyoxal.